# EUROPEAN PATENT SPECIFICATION

(11) **EP 3 001 746 B1**
(45) Date of publication and mention of the grant of the patent: **18.12.2019**
(21) Application number: 13887117.3
(22) Date of filing: 21.06.2013
(51) Int. Cl.: H04W 72/00

(54) **EMBMS MANAGEMENT METHOD, MULTIMEDIA BROADCAST MULTICAST SERVICE COORDINATION ENTITY AND BASE STATION**
EMBMS-VERWALTUNGSVERFAHREN, MULTIMEDIA-BROADCAST-MULTICAST-DIENSTKOORDINATIONSEINHEIT UND BASISSTATION
PROCÉDÉ DE GESTION EMBMS, ENTITÉ DE COORDINATION DE SERVICE DE DIFFUSION/MULTIDIFFUSION MULTIMÉDIA ET STATION DE BASE

(43) Date of publication of application: 30.03.2016
(73) Proprietor: Huawei Technologies Co., Ltd., Longgang District Shenzhen, Guangdong 518129 (CN)
(72) Inventor: LU, Zhiqiang, Shenzhen Guangdong 518129 (CN); REN, Qiandong, Shenzhen Guangdong 518129 (CN)
(74) Representative: Pfenning, Meinig & Partner mbB
(86) International application number: PCT/CN2013/077676
(87) International publication number: WO 2014/201695

(56) References cited:
- EP-A1- 2 299 739
- WO-A1-2008/135934
- CN-A- 101 820 687
- CN-A- 101 883 320
- CN-A- 102 045 643
- CN-A- 102 355 708
- US-A1- 2013 107 784

## Description

### TECHNICAL FIELD

The present invention relates to an eMBMS (Evolved Multimedia Broadcast Multicast Service, evolved multimedia broadcast multicast service) management method, a multimedia broadcast multicast service coordination entity (MCE), and a base station, and in particular, to an eMBMS management method that enables the eMBMS to run in coordination with another service, and an MCE and a base station to which the management method is applied.

### BACKGROUND

To effectively utilize mobile network resources, the 3rd Generation Partnership Project (3rd Generation Partnership Project, 3GPP) proposes a multimedia broadcast multicast service (Multimedia Broadcast Multicast Service, MBMS), in hopes of providing diversified multimedia services in a mobile network, so as to follow development trend of mobile data in the future. The support of eMBMS in a long term evolution (Long Term Evolution, LTE) system is provided to offer streaming and instant broadcasting services of higher quality.

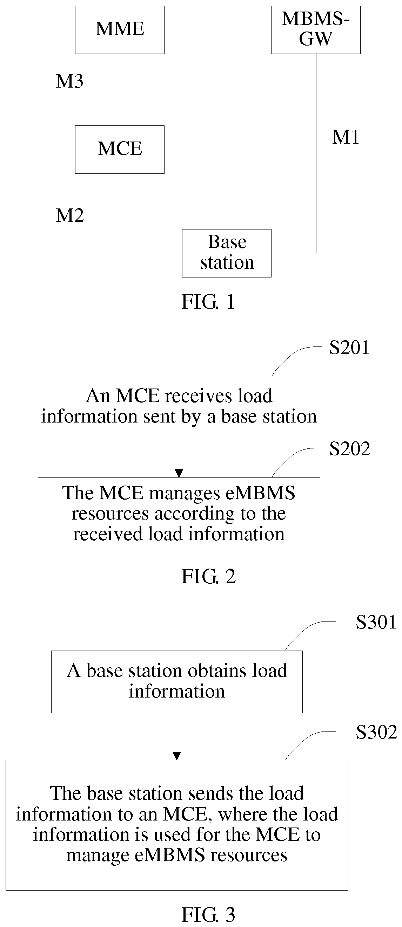

FIG. 1 is a diagram illustrating a conventional logical architecture of the eMBMS, where the logical architecture mainly includes the following logical entities: a mobility management entity (mobility management entity, MME), an MBMS gateway (MBMS gateway, MBMS-GW), a multimedia broadcast multicast service coordination entity (MBMS Coordination Entity, MCE), a base station (for example, an evolved NodeB, an eNB, or another type of base station), and M1, M2 and M3 interfaces. The MCE is responsible for allocating radio resources of all base stations in an MBSFN (Multicast/Broadcast over Single Frequency Network, multicast/broadcast over single frequency network) area, and the base station is responsible for serving users of all cells covered by the base station in the MBSFN area. The M1 interface is a communications interface between the MBMS gateway and the base station, the M2 interface is a communications interface between the MCE and the base station, and the M3 interface is a communications interface between the MME and the MCE.

However, in a mobile network to which both an eMBMS and another service (for example, a unicast service such as a call service) are applied, a conflict between the eMBMS and the another service may occur. For example, the occupation of subframes by a PMCH (Physical Multicast Channel, physical multicast channel) of the eMBMS reduces the amount of PRB (Physical Resource Block, physical resource block) resources that can be used by a common LTE service, and a unicast service such as a call service probably cannot be supported in time despite the fact that a relatively high priority is assigned to the unicast service. This leads to a call failure or a decrease in call quality, which in turn affects user experience.

EP 2299739 A1 discloses radio communication method. In the method, a Multi-cell/Multicast Coordination Entity (MCE) receives communication status information (eNB Measurement Report in FIG. 2) form base stations (eNBI-eNBn in FIG. 2), and checks, based on the measurement report, if the MBSFN (or MBSFN and unicast) transmission parameter in the MBSFN area needs to be reset (reconfiguration decision in FIG. 2). If it is determined by the MCE that the MBSFN transmission parameter needs to be reset, the MCE resets the MBSFN transmission parameter. The information included in the eNB measurement report includes volume of PTP traffic in unicast transmission, number of active UEs performing unicast transmission, number of VoIP UEs, Number of UEs receiving MBSFN; number of UEs requesting MBSFN; and MBSFN quality.

WO 2008/135934 A1 discloses a method for controlling base stations for multimedia broadcast communications. In the method, each of base stations compiles an activity status report based on a counting report and a channel quality indicator report received from user equipment, and sends the activity status report to a multi-cell multimedia broadcast and multimedia multicast service coordination entity ("MCE"). The MCE calculates a static contribution table, determines whether to turn on or off the multimedia broadcast and multimedia multicast service or reuse the base stations based on the static contribution table and received activity status reports, and sends commands to the base stations to control behaviours thereof. In some cases, certain base stations may not have any user equipment receiving multimedia broadcast and multimedia multicast service at all, and in the case, it may be advantageous to cease the multimedia broadcast and multimedia multicast service transmissions from the idle base station to reduce the overall communication system power consumption. Furthermore, the unused multimedia broadcast and multimedia multicast service spectrum associated with the idle base station may be allocated for other resources such as unicast communications, thereby improving the communication system spectrum efficiency.

CN 102045643 A discloses a resource adjustment method. In the method, an eNB sends a resource using status of the eNB to a multi-cell/multicast coordination entity (MCE). The MCE adjusts the resources of the eNB according to the resource using status. The resource using status includes: idle, overflowed, a radio of resources used by the eNB to resources allocated to the eNB, a radio of idle resources to resources allocated to the eNB, or a radio of overflowed resources to resources allocated to the eNB. The adjusting the resources of the eNB includes: when determining that there are idle resources in the eNB, the MCE reduces the resources allocated to the eNB; when determining that the resources overflows, the MCE increases the resources allocated to the eNB.

### SUMMARY

The object of the present invention is achieved by the features of the appended independent claims.

In view of this, embodiments of the present invention provide an eMBMS management method, an MCE, and a base station, so as to effectively manage the eMBMS, thereby eliminating or reducing conflicts between the eMBMS and another service to enable the two services to run in coordination with each other.

A first aspect provides an evolved multimedia broadcast multicast service (eMBMS) management method, where the method includes:
receiving, by a multimedia broadcast multicast service coordination entity (MCE), load information sent by a base station; and
managing, by the MCE, eMBMS resources according to the received load information, wherein the managing, by the MCE, eMBMS resources according to the received load information includes:
   when the load information indicates that a load level of the base station is greater than or equal to a first threshold, making, by the MCE, the base station exit a multicast/broadcast over single frequency network (MBSFN) area, or making at least one of cells served by the base station exit an MBSFN area.

With reference to the first aspect, in a first possible implementation, the making at least one of cells served by the base station exit an MBSFN area includes:
making, according to a descending order of loads of the cells, at least one of the cells served by the base station exit the MBSFN area.

With reference to the first possible implementation of the first aspect, in a second possible implementation, the managing, by the MCE, eMBMS resources according to the received load information further includes:
when the load information indicates that the load level of the base station is less than or equal to a second threshold, making, by the MCE, the base station or at least one of the cells served by the base station join the MBSFN area.

With reference to the first aspect and any one of the first to the second possible implementations of the first aspect, in a third possible implementation, the load information received by the MCE is overall load information of the base station and/or load information of the cells served by the base station.

With reference to the first aspect and any one of the first to the third possible implementations of the first aspect, in a fourth possible implementation, before the MCE receives the load information, the method further includes:
sending, by the MCE, a query request to the base station, where the query request is used for instructing the base station to send the load information.

With reference to the first aspect and any one of the first to the fourth possible implementations of the first aspect, in a fifth possible implementation, when the base station and the MCE are in a same communications network, the load information is carried in M2 interface protocol signaling; or
when the base station and the MCE are in different communications networks, the load information is carried in a radio access network information management (RIM) message.

With reference to the first aspect, or any one of the first to the fifth possible implementations of the first aspect, in a sixth possible implementation, the method further includes:
sending, by the MCE, QoS information to the base station.

A second aspect provides a multimedia broadcast multicast service coordination entity (MCE), where the MCE includes:
a receiving module, configured to receive load information sent by a base station; and
a management module, configure to manage eMBMS resources according to the received load information, wherein the management module includes:
   a first management unit, configured to: when the load information indicates that a load level of the base station is greater than or equal to a first threshold, make the base station exit a multicast/broadcast over single frequency network (MBSFN) area, or make at least one of cells served by the base station exit an MBSFN area.

With reference to the second aspect, in a first possible implementation:
the first management unit makes, according to a descending order of loads of the cells, at least one of the cells served by the base station exit the MBSFN area.

With reference to the second aspect, in a second possible implementation, the management module further includes:
a second management unit, configured to: when the load information indicates that the load level of the base station is less than or equal to a second threshold, make the base station or at least one cell served by the base station join the MBSFN area.

With reference to the second aspect, or any one of the first to the second possible implementations of the second aspect, in a third possible implementation, the load information received by the receiving module is overall load information of the base station and/or load information of the cells served by the base station.

With reference to the second aspect, or any one of the first to the third possible implementations of the second aspect, in a fourth possible implementation, the MCE further includes:
a first sending module, configured to: before the load information is received, send a query request to the base station, where the query request is used for instructing the base station to send the load information.

With reference to the second aspect and any one of the first to the fourth possible implementations of the second aspect, in a fifth possible implementation, when the base station and the MCE are in a same communications network, the load information is carried in M2 interface protocol signaling; or
when the base station and the MCE are in different communications networks, the load information is carried in a radio access network information management (RIM) message.

With reference to the second aspect and any one of the first to the fifth possible implementations of the second aspect, in a sixth possible implementation, the MCE further includes:
a second sending module, configured to send QoS information to the base station.

A third aspect provides computer program comprising program code means for performing all the steps of any of the above methods when the program is run on a computer.

### Beneficial Effects

By means of the foregoing solutions, the eMBMS can be effectively managed, thereby eliminating or reducing conflicts between the eMBMS and another service to enable the two services to run in coordination with each other.

Exemplary embodiments will be described in detail with reference to the following accompanying drawings, to make other features and aspects of the present invention clearer.

### BRIEF DESCRIPTION OF DRAWINGS

The accompanying drawings that are included in the specification and constitute a part of the specification show exemplary embodiments, features, and aspects of the present invention together with the specification, and are used to explain the principle of the present invention.
FIG. 1 is a diagram illustrating a conventional logical architecture of the eMBMS;
FIG. 2 is a flowchart of an eMBMS management method according to an embodiment of the present invention;
FIG. 3 is a flowchart of an eMBMS management method according to another embodiment of the present invention;
FIG. 4 is a structural diagram of an eMBMS management apparatus according to an embodiment of the present invention;
FIG. 5 is a structural diagram of an eMBMS management apparatus according to an implementation of an embodiment of the present invention;
FIG. 6 is a structural diagram of an eMBMS management apparatus according to another implementation of an embodiment of the present invention;
FIG. 7 is a structural diagram of an eMBMS management apparatus according to another implementation of an embodiment of the present invention;
FIG. 8 is a structural diagram of an eMBMS management apparatus according to another implementation of an embodiment of the present invention;
FIG. 9 is a structural diagram of an eMBMS management apparatus according to another implementation of an embodiment of the present invention;
FIG. 10 is a structural diagram of an eMBMS management apparatus according to another embodiment of the present invention;
FIG. 11 is a structural diagram of an eMBMS management apparatus according to an implementation of another embodiment of the present invention;
FIG. 12 shows a structural diagram of an eMBMS management apparatus according to another implementation of another embodiment of the present invention;
FIG. 13 is a structural diagram of an eMBMS management device according to an embodiment of the present invention; and
FIG. 14 is a structural diagram of an eMBMS management device according to another embodiment of the present invention.

### DESCRIPTION OF EMBODIMENTS

The following describes various exemplary embodiments, features, and aspects of the present invention in detail with reference to the accompanying drawings. Same or similar components are indicated by a same reference numeral in the accompanying drawings. Various aspects of the embodiments are illustrated in the accompanying drawings, however, unless otherwise stated, there is no need to draw the accompanying drawings to scale.

The term "exemplary" means being used as an example or an embodiment, or serving an illustrative purpose. Any "exemplary" embodiment described herein shall not be construed as being better or advantageous over other embodiments.

Furthermore, in the following specific implementations, numerous specific details are set forth to provide a better understanding of the present invention. A person skilled in the art should understand that, the present invention may also be practiced without these specific details. In some other embodiments, the method, approach, component, and circuit that are known to all are not described in detail, so as to focus on the purport of the present invention.

### Embodiment 1

FIG. 2 is a flowchart of an eMBMS management method according to an embodiment of the present invention. As shown in FIG. 2, the method in this embodiment mainly includes:
S201: An MCE receives load information sent by a base station.
S202: The MCE manages eMBMS resources according to the received load information.

By means of the method in this embodiment, the MCE can dynamically manage eMBMS resources according to the load information sent by the base station, and therefore dynamically coordinate the running of the eMBMS with the running of another service, thereby solving the prior art problem of the two services conflicting with each other.

The base station may send the load information to the MCE proactively or in response to a query request sent by the MCE.

The load information may reflect a load level of the base station, or reflect load levels of cells served by the base station (in other words, in coverage area of the base station), or reflect both of them. Besides, the load information may further reflect an overall load level of an MBSFN area in which the base station is located.

According to different content indicated by the load information, the MCE may perform various adjustments adequately. The adjustment principle is that: when the base station or the MBSFN area has a high load level, amount of resources occupied by the eMBMS service is reduced, so that the reduced amount of resources may be used for another service, such as a unicast service; and when the base station or the MBSFN area has a low load level, amount of resources occupied by the eMBMS service is increased, so that a user of the eMBMS service may be better served if permitted. The following provides several exemplary implementations of how the MCE manages eMBMS resources according to the received load information.

### Implementation 1

In a possible implementation, the load information may reflect the load level of the base station, and when the load information indicates that the load level of the base station is greater than or equal to a first threshold, the MCE makes the base station exit the multicast/broadcast over single frequency network MBSFN area, or makes at least one of the cells served by the base station exit the MBSFN area. The act of exiting is equivalent to releasing a resource of the base station, so that the exiting base station or cell no longer participates in the eMBMS service, and the released resource is used by another service (for example, a unicast service with a higher priority), thereby effectively adjusting resource occupied by the eMBMS.

A base station may be selected as an exiting unit, or a cell may be used as an exiting unit, depending on a practical situation. For example, if a load level of only a particular cell served by the base station exceeds a threshold and the base station can take care of its load adequately, the cell whose load level exceeds the threshold may be made to exit the MBSFN area. If an overall load level of the base station exceeds a threshold, a cell served by the base station may be selected, according to a preset principle, to exit the MBSFN area, even until the whole base station exits the MBSFN area; or the whole base station may be made to exit the MBSFN area.

As an example, at least one of the cells is made to exit the MBSFN area according to a descending order of the load levels of the cells, that is, a cell with a high load level is preferentially made to exit the MBSFN area. In another example, a threshold may be set, and a cell whose load level exceeds the threshold is made to exit the MBSFN area. In addition, it can be understood that, making a cell exit the MBSFN area may also include a case of setting the cell as a reserved cell (MBSFN AREA RESERVED CELL, namely, a cell in which the MBFSN service is not transmitted and another service is allowed to be transmitted).

This implementation may further include: when the load information indicates that the load level of the base station is less than or equal to a second threshold, making, by the MCE, the base station or at least one cell served by the base station join the MBSFN area. In an example, the base station or cell that is made to exit may be preferentially selected to join the MBSFN area.

The first threshold may or may not be different from the second threshold.

### Implementation 2

In a possible implementation, the MCE may determine the overall load level of the MBSFN area according to the received load information, and when the overall load level of the MBSFN area is greater than or equal to a third threshold, the MCE reduces an amount of resources occupied by the eMBMS service in the MBSFN area.

This implementation may further include: when the overall load level of the MBSFN area is less than or equal to a fourth threshold, increasing, by the MCE, the amount of resources occupied by the eMBMS service in the MBSFN area.

In the foregoing implementation, the amount of resources occupied by the eMBMS can be adjusted based on the overall load level of the MBSFN area. Consequently, when the overall load level is high, a part of resources occupied by the eMBMS service can be released, and the released resources can be used by another service, thereby solving the problem of the two service conflicting with each other. Adjusting the whole MBSFN area facilitates unified planning and avoids discontinuity of channels in the area.

The overall load level of the MBSFN area may be determined according to load information sent by all base stations in the MBSFN area. As an example, load levels of the base stations may be accumulated to obtain the overall load level of the MBSFN area. However, the present invention is not limited thereto. For example, the overall load level of the MBSFN area may also be calculated based on the load levels of the base stations and according to another preset method, such as weighted summation.

The third threshold may or may not be different from the fourth threshold.

### Implementation 3

According to a possible implementation, when the load information indicates that the load level of the base station is greater than or equal to a fifth threshold, the MCE reduces the amount of resources occupied by the eMBMS service of the base station.

This implementation may further include: when the load information indicates that the load level of the base station is less than or equal to a sixth threshold, the MCE increases the amount of resources occupied by the eMBMS service of the base station.

Compared with implementation 2, in implementation 3, a base station instead of the whole MBSFN area is adjusted, which makes the adjustment more flexible.

The fifth threshold may or may not be different from the sixth threshold.

As an example of implementations 2 and 3, the amount of resources occupied by the eMBMS service of the base station (or the whole MBSFN area) may be adjusted (reduced or increased) by adding the load information of the base station as an adjustment parameter, in addition to being based on a conventional M2AP protocol procedure. For example, based on a conventional mode of eMBMS resource dynamic allocation, the number of subframes in the base station or the MBSFN area may be dynamically modified (for example, reduced or increased) according to a change in the load level of the base station (and/or a cell) or the overall load level of the MBSFN area, so as to adjust (for example, reduce or increase) resource occupied by the eMBMS service, where the load level of the base station (and/or a cell) or the overall load level of the MBSFN area is indicated by the load information.

The foregoing implementations 1, 2, and 3 are three exemplary implementations of how the MCE manages eMBMS resources according to the received load information. However, the present invention is not limited thereto. According to different content indicated by the load information, different measures may be taken to adjust eMBMS resources provided that these measures conform to the foregoing adjustment principle.

Generally, any information that can reflect a load state of the base station can be sent as the load information. The load information may include but is not limited to a combination of any one or more of the following:
resource occupation by a cell/base station;
number of cell users;
QoS satisfaction with user services;
service delay;
transmission resource occupation rate;
CPU usage rate;
cell interference level;
downlink power utilization rate; and
cell spectrum efficiency.

Different load information may reflect the load level of a cell or the base station based on different resources. For example, a usage level of a resource shared by base stations, such as a transmission resource occupation rate, may directly reflect the overall load level of the base station. A usage level of a cell-independent resource, such as the number of cell users in a particular cell, may directly reflect a load level of the particular cell, and the total number of cell users in all cells may also be regarded as reflecting the load level of the base station.

The load information may be sent by the base station to the MCE in various manners. The following describes several exemplary implementations of how the base station sends the load information to the MCE.

### Implementation 4

In a possible implementation, when the base station and the MCE are in a same communications network, the load information is carried in M2 interface protocol signaling.

An advantage of using protocol-defined signaling is that the load information can be carried in the defined signaling without a need to change a protocol procedure between the base station and the MCE.

Correspondingly, the query request sent by the MCE to the base station may also be carried in M2 interface protocol signaling.

In a case in which the base station reports the load information by using protocol-defined signaling, the M2 interface protocol signaling that may be selected for reporting the load information includes but is not limited to:
interface reset signaling (Reset);
interface Setup signaling (M2 Setup);
error indication signaling (Error Indication);
configuration update signaling (Configuration Update); and
MBMS scheduling information signaling (MBMS Scheduling Information).

Generally, signaling associated with a non-eMBMS service may be selected as signaling used for carrying the load information, so as to transmit the load information without affecting the eMBMS service. As an example, configuration update signaling (Configuration Update) is selected to report the load information, that is, the load information is carried in configuration update signaling. An advantage of this implementation is that transmission of configuration update signaling is on a periodic basis and the MCE can periodically receive the load information reported by the base station, so as to periodically adjust eMBMS resources dynamically. However, the present invention is not limited thereto. For example, when the MBSFN area is initially established and the base station enters and exits the MBSFN area, the load information may also be carried in a related protocol message. Compared with the prior art in which an M2 interface protocol is not used to transmit the load information of the base station to the MCE, this embodiment makes an optimization to content of M2 interface protocol signaling, to enable the MCE to effectively perform resource coordination based on the load information.

In a possible implementation, an information element already defined in an M2 interface protocol may be used as the load information.

Generally, an information element may be selected provided that the information element can reflect necessary load information of the base station. For example, defined information elements that may be selected include but are not limited to a combination of any one or more of the following:
information element (Composite Available Capacity Group) reflecting composite available capacity;
information element (LOAD INFORMATION) reflecting an interference level;
information element (Hardware Load Indicator) reflecting a hardware load;
information element (S1 TNL Load Indicator) reflecting a transmission load;
information element (Load Indicator) reflecting a load level (low, intermediate, high, or overload); and
information element (Radio Resource Status) reflecting a radio resource status (to indicate a PRB utilization rate).

The "Composite Available Capacity Group" information element includes cell-level and overall E-UTRAN (evolved universal terrestrial radio access network, evolved universal terrestrial radio access network) resource information, and is identified by linear numerical values 1 to 100. In an example, the "Composite Available Capacity Group" information element is used as the load information. An advantage of the "Composite Available Capacity Group" information element is that the "Composite Available Capacity Group" information element can reflect both load levels of cells covered by the base station and the overall load level of the base station.

### Implementation 5

In a possible implementation, when the base station and the MCE are in different communications networks, the load information is carried in a radio access network information management RIM message.

The MCE may obtain load information in another communications network based on an RIM (RAN Information Management, radio access network information management) procedure. RIM is a procedure defined in protocols, such as 6.413/48.018 to allow entities in radio access networks to exchange information through a core network, and the RIM includes a procedure in which an LTE communications network system provides a load state of the LTE communications network system to a different surrounding system (for example, a communications network system such as a GSM system). In this case, both the query request sent by the MCE and the load information reported by the base station may be carried in an RIM message for transmission.

For example, in a possible implementation, the requesting party MCE may use an RIM message procedure to send the query request to the reporting party, base station, on an M2 interface by using a self-defined RIM message (for example, for the RIM message procedure and format, reference may be made to a case in which an MME sends an RIM message to an eNB to obtain load information), and receive the load information that the reporting party base station sends by using a self-defined RIM message.

In another possible implementation, the requesting party MCE may also forward the query request through a reporting party MME. For example, the requesting party MCE may simulate itself as a network element of a different system, and send the query request to the reporting party MME on an M3 interface by using a self-defined RIM message with reference to an RIM procedure between a network element of a different system and the MME. The reporting party MME may forward the query request to the base station through an S1 interface between the MME and the base station by using a normal RIM procedure, receive the load information, and then send the load information to the requesting party MCE through the M3 interface by using a self-defined RIM message.

In the foregoing two implementations, the requesting party MCE may obtain the load information of the reporting party by using an RIM procedure, and then perform resource management among different communications network systems based on the load information. For example, when a base station in a communications network system in which the reporting party is located has an excessively high load level, a part of multicast or unicast services may be transferred to the requesting party to implement resource coordination.

Implementations 4 and 5 are two possible implementations of how the MCE receives the load request of the base station. However, the present invention is not limited thereto. For example, the base station may send the load information to the MCE by using a self-defined message, or the MCE sends a query request to the base station by using a self-defined message. The content, reporting time/cycle, reporting triggering condition, and so on of the self-defined message may be self-defined by a user provided that the load information can be reported to the MCE.

As described above, the load information can indicate a load level (for example, the load level of the base station, a load level of a cell, or the overall load level of the MBSFN area). A specific procedure in which the MCE determines the load level may vary depending on specific content of the load information. Several possible implementations are provided in the following.

In a possible implementation, the load information is original information (for example, an information element defined in an M2 interface protocol) that can be directly obtained by the base station. In this case, after receiving the original information, the MCE may calculate, according to a preset calculation method, a determining value for determining the load level, compare the determining value with a preset threshold (for example, a high threshold and a low threshold) to obtain a determining result, and then perform eMBMS resource management according to the determining result. The calculation method includes but is not limited to: calculating a percentage ratio of a load level to an allowed maximum load level, using the percentage ratio as the determining value, or calculating the determining value according to a preset algorithm and based on multiple different parameters that are in the load information and reflect the load level, or directly using a parameter value as the determining value without calculation, where the used parameter value is included in an information element and indicates the load level.

In another possible implementation, the base station may first perform calculation processing based on original load information, and then report a calculation processing result (for example, the determining value described above) to the MCE as the load level. The MCE may determine whether the load level is high or low according to the calculation result.

In another possible implementation, the base station may also perform calculation and determining processing on the original load information, and report a determining result to the MCE. The MCE may directly perform eMBMS resource management according to the determining result. An advantage of this possible implementation is that the operating burden of the MCE may be reduced.

However, generally, a standard and method for determining whether the load level is high or low may be defined as needed, and are not limited to the foregoing implementations.

FIG. 3 shows an evolved multimedia broadcast multicast service eMBMS management method according to an example of the present invention. The method includes:
S301: A base station obtains load information.
S302: The base station sends the load information to a multimedia broadcast multicast service coordination entity MCE, where the load information is used for the MCE to manage eMBMS resources.

By means of the method in this example, the MCE can dynamically manage eMBMS resources according to the load information sent by the base station, and therefore dynamically coordinate the running of the eMBMS with the running of another service, thereby solving the prior art problem of the two services conflicting with each other.

In a possible implementation, the load information is overall load information of the base station and/or load information of cells served by the base station.

In a possible implementation, before the base station sends the load information to the MCE, the method further includes: receiving, by the base station, a query request from the MCE, where the query request is used for instructing the base station to send the load information.

In a possible implementation, when the base station and the MCE are in a same communications network, the load information is carried in M2 interface protocol signaling.

In a possible implementation, when the base station and the MCE are in different communications networks, the load information is carried in a radio access network information management RIM message.

In the prior art, QoS (Quality of Service, quality of service) information of the eMBMS is transmitted to an MCE by an MME on an M3 interface. The MCE performs service admission and scheduling according to air interface bandwidth. When performing transmission admission, a base station does not obtain required QoS information.

Based on Embodiment 1 and example, in this embodiment, the MCE sends QoS information to the base station (or the base station receives QoS information from the MCE), so that the base station can perform admission decision and overload control on the eMBMS more accurately according to the QoS information transmitted by the MCE.

In a possible implementation, the QoS information transmitted by the MCE may include QoS information required by the base station to perform admission decision and overload control on the eMBMS, such as a QCI (QoS Class Identifier, QoS class identifier) and a GBR (Guaranteed Bit Rate, guaranteed bit rate).

In a possible implementation, a defined information element containing the QoS information may be attached to conventional signaling that conforms to an M2 interface protocol, so as to send the information element to the base station. For example, an MBMS E-RAB QoS parameters information element defined in an M2 interface protocol (for example, the 36.444 protocol) is attached to Session Start Request (session start request) signaling, and the information element is forwarded to the base station through the MCE. However, the present invention is not limited thereto. For example, a self-defined information element that carries necessary QoS information may also be used to replace a protocol-defined information element, or self-defined signaling may also be used to replace protocol-defined signaling. Self-defined signaling and its content, transmission time/cycle, triggering condition, and so on may be self-defined according to an actual need.

### Embodiment 2

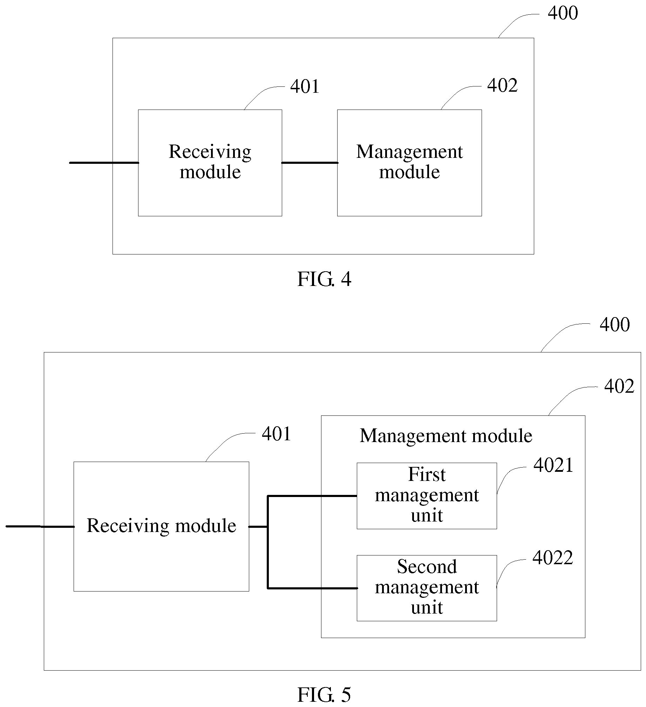

FIG. 4 shows a multimedia broadcast multicast service coordination entity (MCE) 400 according to a further embodiment of the present invention, including:
a receiving module 401, configured to receive load information sent by a base station; and
a management module 402, configure to manage eMBMS resources according to the received load information.

In this embodiment, the MCE can dynamically manage eMBMS resources according to the load information sent by the base station, and therefore dynamically coordinate the running of the eMBMS with the running of another service, thereby solving the prior art problem of the two services conflicting with each other.

Several exemplary implementations of the management module 402 are provided in the following.

In a possible implementation shown in FIG. 5, the management module 402 includes a first management unit 4021, configured to: when the load information indicates that a load level of the base station is greater than or equal to a first threshold, make the base station exit a multicast/broadcast over single frequency network MBSFN area, or make at least one of cells served by the base station exit the MBSFN area. The act of exiting is equivalent to releasing a resource of the base station, so that the exiting base station or cell no longer participates in the eMBMS service, and the released resource is used by another service (for example, a unicast service with a higher priority), thereby effectively adjusting resource occupied by the eMBMS.

In an example, the first management unit 4021 may make, according to a descending order of loads of the cells, at least one of the cells served by the base station exit the MBSFN area, that is, a cell with a high load level is preferentially made to exit the MBSFN area. In another example, a threshold may also be set, and a cell whose load level exceeds the threshold is made to exit the MBSFN area. In addition, it can be understood that making a cell exit the MBSFN area may also include a case of setting the cell as a reserved cell (MBSFN AREA RESERVED CELL, namely, a cell in which the MBFSN service is not transmitted and which is allowed to transmit another service).

In an example, the management module may further include a second management unit 4022, configured to: when the load information indicates that the load level of the base station is less than or equal to a second threshold, make the base station or at least one of the cells served by the base station join the MBSFN area.

The first threshold may or may not be different from the second threshold.

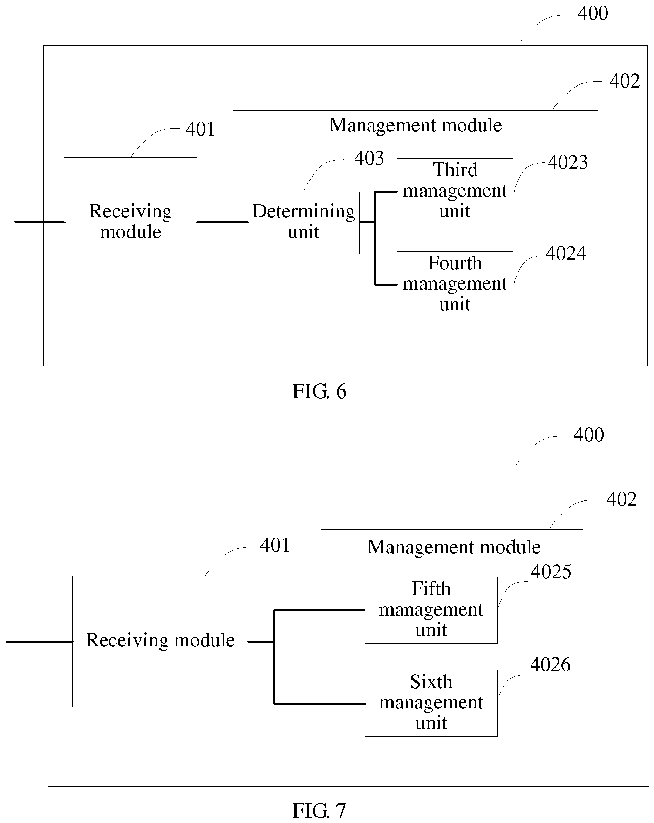

In another possible implementation shown in FIG. 6, the management module 402 may include a determining unit 403. The determining unit 403 is configured to determine an overall load level of the MBSFN area according to the load information; and the management module may further include a third management unit 4023, configured to: when the overall load level of the MBSFN area is greater than or equal to a third threshold, reduce an amount of resources occupied by the eMBMS service in the MBSFN area.

In an example, the management module 402 may further include a fourth management unit 4044, configured to: when the overall load level of the MBSFN area is less than or equal to a fourth threshold, increase the amount of resources occupied by the eMBMS service in the MBSFN area. In the foregoing implementation, the amount of resources occupied by the eMBMS can be adjusted based on the overall load level of the MBSFN area, so that when the overall load level is high, a part of resources occupied by the eMBMS service can be released, and the released resources are used by another service, thereby solving the problem of the two services conflicting with each other. Adjusting the whole MBSFN area facilitates unified planning and avoids discontinuity of channels in the area.

The third threshold may or may not be different from the fourth threshold.

In another possible implementation shown in FIG. 7, the management module 402 may include a fifth management unit 4025, configured to: when the load information indicates that the load level of the base station is greater than or equal to a fifth threshold, reduce the amount of resources occupied by the eMBMS service of the base station.

In an example, the management module 402 may further include a sixth management unit 4026, configured to: when the load information indicates that the load level of the base station is less than or equal to a sixth threshold, increase the amount of resources occupied by the eMBMS service of the base station.

In this possible implementation, the base station instead of the whole MBSFN area is adjusted as an unit, which makes the adjustment more flexible.

The fifth threshold may or may not be different from the sixth threshold.

The foregoing implementations are three exemplary implementations of how the management module 402 manages eMBMS resources according to the received load information. However, the present invention is not limited thereto. According to different content indicated by the load information, the management module 402 may take different measures to adjust eMBMS resources provided that these measures conform to the foregoing adjustment principle.

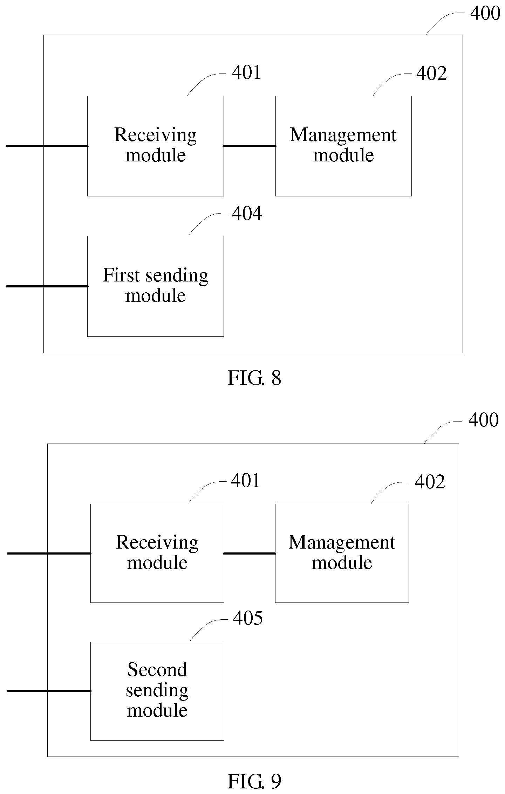

In a possible implementation shown in FIG. 8, the MCE 400 further includes:
a first sending module 404, configured to: before the load information is received, send a query request to the base station, where the query request is used for instructing the base station to send the load information, and the load information may be overall load information of the base station and/or load information of cells served by the base station.

In a possible implementation, when the base station and the MCE are in a same communications network, the load information is carried in M2 interface protocol signaling.

M2 interface protocol signaling that may be selected for reporting the load information includes but is not limited to:
interface reset signaling;
interface setup signaling;
error indication signaling;
configuration update signaling; and
eMBMS scheduling information signaling.

Generally, signaling associated with a non-eMBMS service may be selected as signaling used for carrying the load information, so as to transmit the load information without affecting the eMBMS service.

In another possible implementation, when the base station and the MCE are in different communications networks, the load information is carried in a radio access network information management RIM message.

In a possible implementation shown in FIG. 9, the MCE further includes:
a second sending module 405, configured to send QoS information to the base station.

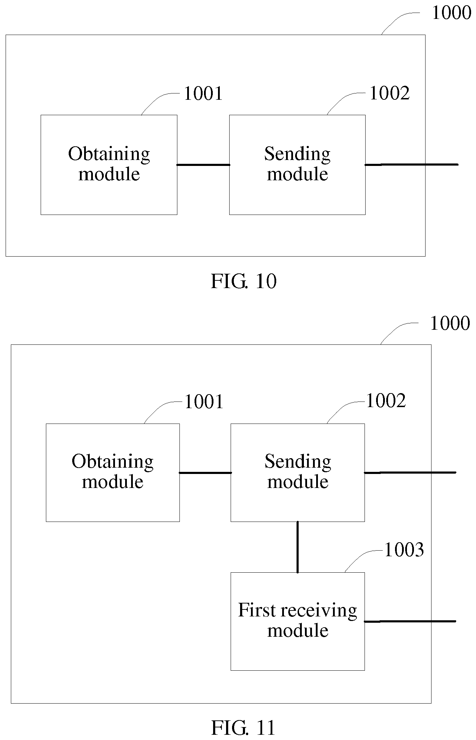

FIG. 10 shows a base station 1000 according to an example of the present invention. The base station includes:
an obtaining module 1001, configured to obtain load information; and
a sending module 1002, configured to send the load information to a multimedia broadcast multicast service coordination entity MCE, where the load information is used for the MCE to manage eMBMS resources.

With the aid of the base station in this example, the MCE can dynamically manage eMBMS resources according to the load information sent by the base station, and therefore dynamically coordinate the running of the eMBMS with the running of another service, thereby solving the prior art problem of the two services conflicting with each other.

In a possible implementation, the load information is overall load information of the base station and/or load information of cells served by the base station.

In a possible implementation shown in FIG. 11, the eMBMS management apparatus further includes:
a first receiving module 1003, configured to: before the load information is sent to the MCE, receive a query request from the MCE, where the query request is used for instructing the sending module to send the load information.

In a possible implementation, when the base station and the MCE are in a same communications network, the load information is carried in M2 interface protocol signaling.

M2 interface protocol signaling that may be selected for reporting the load information includes but is not limited to:
interface reset signaling;
interface setup signaling;
error indication signaling;
configuration update signaling; and
eMBMS scheduling information signaling.

Generally, signaling associated with a non-eMBMS service may be selected as signaling used for carrying the load information, so as to transmit the load information without affecting the eMBMS service.

In a possible implementation, when the base station and the MCE are in different communications networks, the load information is carried in a radio access network information management RIM message.

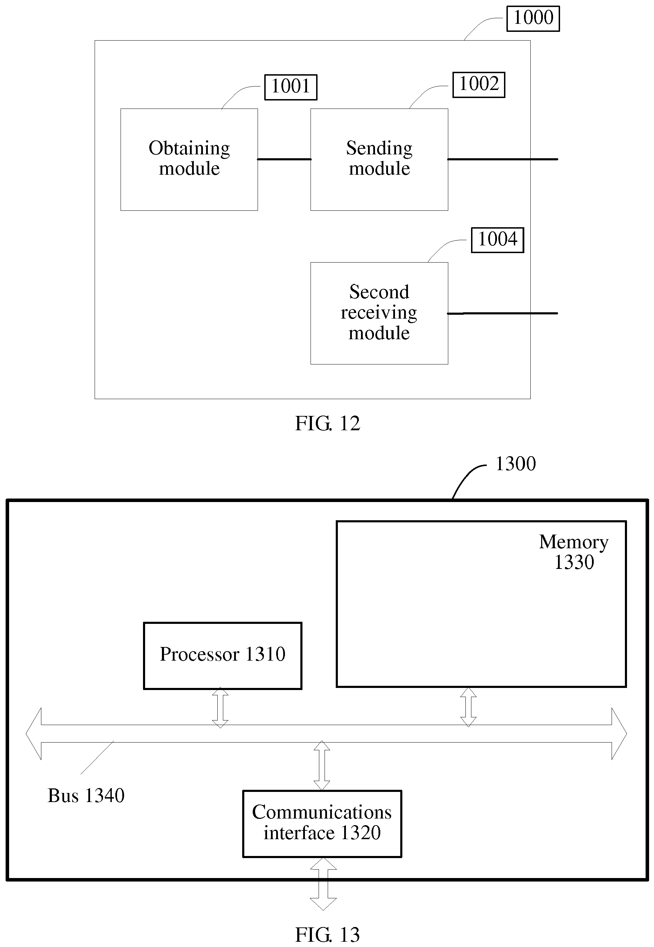

In a possible implementation shown in FIG. 12, the eMBMS management apparatus further includes:
a second receiving module 1004, configured to receive QoS information from the MCE.

### Embodiment 3

FIG. 13 shows a structural block diagram of an eMEMS management device according to another embodiment of the present invention. The eMEMS management device 1300 may be a host server, a personal computer PC, a portable computer, a terminal, or the like that has a computing capability. Specific implementations of a computing node are not limited in specific embodiments of the present invention.

The eMEMS management device 1300 includes a processor (processor) 1310, a communications interface (Communications Interface) 1320, a memory (memory array) 1330, and a bus 1340. The processor 1310, the communications interface 1320, and the memory 1330 communicate with each other by using the bus 1340.

The communications interface 1320 is configured to communicate with a network element, where the network element includes, for example, a virtual machine management center, a shared storage, or the like.

The processor 1310 is configured to execute a program. The processor 1310 may be a central processing unit CPU, an application specific integrated circuit ASIC (Application Specific Integrated Circuit), or one or more integrated circuits configured to implement the embodiments of the present invention.

The memory 1330 is configured to store a file. The memory 1330 may include a high-speed RAM memory, and may also include a non-volatile memory (non-volatile memory), for example, at least one disk memory. The memory 1330 may also be a memory array. The memory 1330 may also be divided into blocks, and the blocks may be combined to form a virtual volume according to a certain rule.

In a possible implementation, the program may include program code instructing a computer operation. The program may specifically be configured to execute each step of the methods in embodiment 1 or 3.

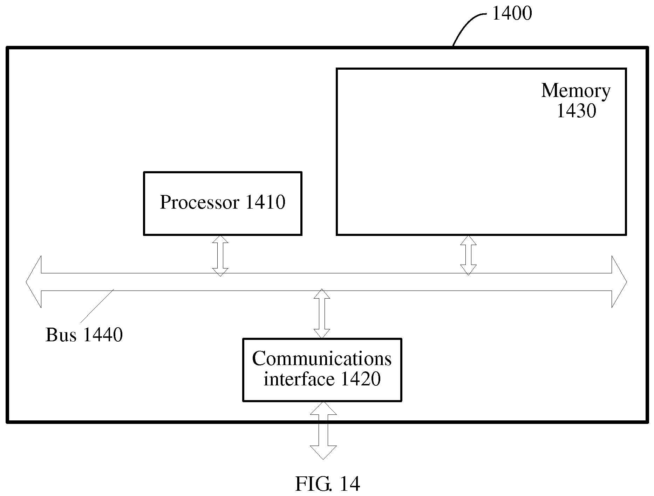

FIG. 14 shows a structural block diagram of an eMEMS management device according to another example of the present invention. The eMEMS management device 1400 may be a host server, a personal computer PC, a portable computer, a terminal, or the like that has a computing capability. Specific implementations of a computing node are not limited in specific embodiments of the present invention.

The eMEMS management device 1400 includes a processor (processor) 1410, a communications interface (Communications Interface) 1420, a memory (memory array) 1430, and a bus 1440. The processor 1410, the communications interface 1420, and the memory 1430 communicate with each other by using the bus 1440.

The communications interface 1420 is configured to communicate with a network element, where the network element includes, for example, a virtual machine management center, a shared storage, or the like.

The processor 1410 is configured to execute a program. The processor 1410 may be a central processing unit CPU, an application specific integrated circuit ASIC (Application Specific Integrated Circuit), or one or more integrated circuits configured to implement the embodiments of the present invention.

The memory 1430 is configured to store a file. The memory 1430 may include a high-speed RAM memory, and may also include a non-volatile memory (non-volatile memory), for example, at least one disk memory. The memory 1430 may also be a memory array. The memory 1430 may also be divided into blocks, and the blocks may be combined to form a virtual volume according to a certain rule.

In a possible implementation, the program may include program code instructing a computer operation. The program may specifically be configured to execute each step of the methods in the above examples.

A person of ordinary skill in the art may be aware that, the exemplary units and algorithm steps described in the embodiments disclosed in this specification may be implemented by electronic hardware, or by a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

When the functions are implemented in a form of computer software and sold or used as an independent product, all or a part of the technical solutions of the present invention (for example, the part contributing to the prior art) may be implemented in the form of a computer software product. The computer software product is stored in a computer readable storage medium and includes several instructions for instructing a computer device (which may be a personal computer, a server, or a network device) to perform all or a part of the steps of the methods described in the embodiments of the present invention. The storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of the present invention, but are not intended to limit the protection scope of the present invention. Using the present invention for a heterogeneous LTE-A network may also be considered. Any variation or replacement readily figured out by a person skilled in the art within the technical scope disclosed in the present invention shall fall within the protection scope of the present invention. Therefore, the protection scope of the present invention shall be subject to the protection scope of the claims.

### Practicability

The eMBMS management method, apparatus, and device provided according to the embodiments of the present invention are applicable to the wireless communications field, and in particular, applicable to a scenario in which an LTE system supports both the eMBMS and another service, such as unicast. The eMBMS management method, apparatus, and device can effectively manage the eMBMS, thereby eliminating or reducing conflicts between the eMBMS and another service to enable the two services to run in coordination with each other.

## Claims

1. An evolved multimedia broadcast multicast service, eMBMS, management method, wherein the method comprises:
receiving (S201), by a multimedia broadcast multicast service coordination entity, MCE, load information sent by a base station; and
managing (S202), by the MCE, eMBMS resources according to the received load information, wherein the method is **characterized in that** the managing (S202), by the MCE, eMBMS resources according to the received load information comprises:
when the load information indicates that a load level of the base station is greater than or equal to a first threshold, making, by the MCE, the base station exit a multicast/broadcast over single frequency network, MBSFN, area, or making at least one of cells served by the base station exit an MBSFN area.

2. The eMBMS management method according to claim 1, wherein the making at least one of cells served by the base station exit an MBSFN area comprises:
making, according to a descending order of loads of the cells, at least one of the cells served by the base station exit the MBSFN area.

3. The eMBMS management method according to claim 1, wherein the managing, by the MCE, eMBMS resources according to the received load information further comprises:
when the load information indicates that the load level of the base station is less than or equal to a second threshold, making, by the MCE, the base station or at least one of the cells served by the base station join the MBSFN area.

4. The eMBMS management method according to any one of claims 1 to 3, wherein the load information received by the MCE is overall load information of the base station and/or load information of cells served by the base station.

5. The eMBMS management method according to any one of claims 1 to 4, wherein before the MCE receives the load information, the method further comprises:
sending, by the MCE, a query request to the base station, wherein the query request is used for instructing the base station to send the load information.

6. The eMBMS management method according to any one of claims 1 to 5, wherein when the base station and the MCE are in a same communications network, the load information is carried in M2 interface protocol signaling; or
when the base station and the MCE are in different communications networks, the load information is carried in a radio access network information management, RIM, message.

7. The eMBMS management method according to any one of claims 1 to 6, further comprising:
sending, by the MCE, QoS information to the base station.

8. A multimedia broadcast multicast service coordination entity, MCE, wherein the MCE comprises:
a receiving module (401), configured to receive load information sent by a base station; and
a management module (402), configure to manage eMBMS resources according to the received load information, wherein the MCE is **characterized in that** the management module (402) comprises:
a first management unit (4021), configured to: when the load information indicates that a load level of the base station is greater than or equal to a first threshold, make the base station exit a multicast/broadcast over single frequency network, MBSFN, area, or make at least one of cells served by the base station exit an MBSFN area.

9. The MCE according to claim 8, wherein:
the first management unit (4021) is configured to make, according to a descending order of loads of the cells, at least one of the cells served by the base station exit the MBSFN area.

10. The MCE according to claim 8, wherein the management module (402) further comprises:
a second management unit (4022), configured to: when the load information indicates that the load level of the base station is less than or equal to a second threshold, make the base station or at least one of the cells served by the base station join the MBSFN area.

11. The MCE according to any one of claims 8 to 10, wherein the load information received by the receiving module (401) is overall load information of the base station and/or load information of cells served by the base station.

12. The MCE according to any one of claims 8 to 11, further comprising:
a first sending module (404), configured to: before the load information is received, send a query request to the base station, wherein the query request is used for instructing the base station to send the load information.

13. The MCE according to any one of claims 8 to 12, wherein when the base station and the MCE are in a same communications network, the load information is carried in M2 interface protocol signaling; or
when the base station and the MCE are in different communications networks, the load information is carried in a radio access network information management, RIM, message.

14. The MCE according to any one of claims 8 to 13, further comprising:
a second sending module (405), configured to send QoS information to the base station.

15. A computer program comprising program code means for performing all the steps of the method of any one of claims 1 to 6 when the program is run on a computer.

## Patentansprüche

1. "Evolved Multimedia Broadcast Multicast Service", eMBMS, Verwaltungsverfahren, wobei das Verfahren umfasst:
Empfangen (S201) von Lastinformationen, die durch eine Basisstation gesendet werden, durch eine "Multimedia Broadcast Multicast Service Coordination Entity", MCE; und
Verwalten (S202) von eMBMS-Ressourcen gemäß den empfangenen Lastinformationen durch die MCE, wobei das Verfahren **dadurch gekennzeichnet ist, dass** das Verwalten (S202) von eMBMS-Ressourcen gemäß den empfangenen Lastinformationen durch die MCE umfasst:
wenn die Lastinformationen anzeigen, dass ein Lastniveau der Basisstation größer oder gleich einem ersten Schwellenwert ist, Veranlassen der Basisstation durch die MCE, einen "Multicast Broadcast Over Single Frequency Network", MBSFN, Bereich zu verlassen, oder Veranlassen mindestens einer der durch die Basisstation bedienten Zellen, einen MBSFN-Bereich zu verlassen.

2. eMBMS-Verwaltungsverfahren nach Anspruch 1, wobei das Veranlassen mindestens einer der durch die Basisstation bedienten Zellen, einen MBSFN-Bereich zu verlassen, umfasst:
Veranlassen mindestens einer der durch die Basisstation bedienten Zellen, den MBSFN-Bereich zu verlassen, gemäß einer absteigenden Reihenfolge von Lasten der Zellen.

3. eMBMS-Verwaltungsverfahren nach Anspruch 1, wobei das Verwalten von eMBMS-Ressourcen durch die MCE gemäß den empfangenen Lastinformationen ferner umfasst:
wenn die Lastinformationen anzeigen, dass das Lastniveau der Basisstation kleiner oder gleich einem zweiten Schwellenwert ist, Veranlassen der Basisstation oder mindestens einer der durch die Basisstation bedienten Zellen durch die MCE, dem MBSFN-Bereich beizutreten.

4. eMBMS-Verwaltungsverfahren nach einem der Ansprüche 1 bis 3, wobei die durch die MCE empfangenen Lastinformationen Gesamtlastinformationen der Basisstation und/oder Lastinformationen von Zellen sind, die durch die Basisstation bedient werden.

5. eMBMS-Verwaltungsverfahren nach einem der Ansprüche 1 bis 4, wobei das Verfahren ferner umfasst, bevor die MCE die Lastinformationen empfängt:
Senden einer Abfrageanforderung durch die MCE an die Basisstation, wobei die Abfrageanforderung dazu verwendet wird, die Basisstation anzuweisen, die Lastinformationen zu senden.

6. eMBMS-Verwaltungsverfahren nach einem der Ansprüche 1 bis 5, wobei, wenn sich die Basisstation und die MCE in einem gleichen Kommunikationsnetz befinden, die Lastinformationen in M2-Schnittstellenprotokollsignalisierung übertragen werden; oder
wenn sich die Basisstation und die MCE in verschiedenen Kommunikationsnetzen befinden, die Lastinformationen in einer "Radio Access Network Information Management", RIM, Nachricht übertragen werden.

7. eMBMS-Verwaltungsverfahren nach einem der Ansprüche 1 bis 6, ferner umfassend:
Senden von QoS-Informationen durch die MCE an die Basisstation.

8. "Multimedia Broadcast Multicast Service Coordination Entity", MCE, wobei die MCE umfasst:
ein Empfangsmodul (401), das dazu eingerichtet ist, durch eine Basisstation gesendete Lastinformationen zu empfangen; und ein Verwaltungsmodul (402), das dazu eingerichtet ist, eMBMS-Ressourcen gemäß den empfangenen Lastinformationen zu verwalten, wobei die MCE **dadurch gekennzeichnet ist, dass** das Verwaltungsmodul (402) umfasst:
eine erste Verwaltungseinheit (4021), die dazu eingerichtet ist: wenn die Lastinformationen anzeigen, dass ein Lastniveau der Basisstation größer oder gleich einem ersten Schwellenwert ist, die Basisstation zu veranlassen, einen "Multicast/Broadcast Over Single Frequency Network", MBSFN, Bereich zu verlassen, oder mindestens eine der durch die Basisstation bedienten Zellen zu veranlassen, einen MBSFN-Bereich zu verlassen.

9. MCE nach Anspruch 8, wobei:
die erste Verwaltungseinheit (4021) dazu eingerichtet ist, gemäß einer absteigenden Reihenfolge von Lasten der Zellen mindestens eine der durch die Basisstation bedienten Zellen zu veranlassen, den MBSFN-Bereich zu verlassen.

10. MCE nach Anspruch 8, wobei das Verwaltungsmodul (402) ferner umfasst:
eine zweite Verwaltungseinheit (4022), die dazu eingerichtet ist: wenn die Lastinformationen anzeigen, dass das Lastniveau der Basisstation kleiner oder gleich einem zweiten Schwellenwert ist, die Basisstation oder mindestens eine der durch die Basisstation bedienten Zellen zu veranlassen, dem MBSFN-Bereich beizutreten.

11. MCE nach einem der Ansprüche 8 bis 10, wobei die durch das Empfangsmodul (401) empfangenen Lastinformationen Gesamtlastinformationen der Basisstation und/oder Lastinformationen von Zellen sind, die durch die Basisstation bedient werden.

12. MCE nach einem der Ansprüche 8 bis 11, ferner umfassend:
ein erstes Sendemodul (404), das dazu eingerichtet, vor dem Empfangen der Lastinformationen eine Abfrageanforderung an die Basisstation zu senden, wobei die Abfrageanforderung dazu verwendet wird, die Basisstation anzuweisen, die Lastinformationen zu senden.

13. MCE nach einem der Ansprüche 8 bis 12, wobei, wenn sich die Basisstation und die MCE in einem gleichen Kommunikationsnetz befinden, die Lastinformationen in M2-Schnittstellenprotokollsignalisierung übertragen werden; oder
wenn sich die Basisstation und die MCE in verschiedenen Kommunikationsnetzen befinden, die Lastinformationen in einer "Radio Access Network Information Management", RIM, Nachricht übertragen werden.

14. MCE nach einem der Ansprüche 8 bis 13, ferner umfassend:
ein zweites Sendemodul (405), das dazu eingerichtet ist, QoS-Informationen an die Basisstation zu senden.

15. Computerprogramm, umfassend Programmcodemittel zum Ausführen aller Schritte des Verfahrens nach einem der Ansprüche 1 bis 6, wenn das Programm auf einem Computer ausgeführt wird.

## Revendications

1. Procédé de gestion de service de diffusion et de multidiffusion multimédia évolué, eMBMS, le procédé comprenant les étapes suivantes :
recevoir (S201), par une entité de coordination de service de diffusion et de multidiffusion multimédia, MCE, des informations de charge envoyées par une station de base; et
gérer (S202), par la MCE, des ressources eMBMS conformément aux informations de charge reçues,
le procédé étant **caractérisé en ce que** la gestion (S202), par la MCE, de ressources eMBMS conformément aux informations de charge reçues, comprend : lorsque les informations de charge indiquent qu'un niveau de charge de la station de base est supérieur ou égal à un premier seuil, l'étape consistant à faire en sorte, par la MCE, que la station de base quitte une zone de réseau monofréquence de diffusion et de multidiffusion, MBSFN, ou à faire en sorte qu'au moins une des cellules servies par la station de base quitte une zone de MBSFN.

2. Procédé de gestion d'eMBMS selon la revendication 1, dans lequel l'étape consistant à faire en sorte qu'au moins une des cellules servies par la station de base quitte une zone de MBSFN comprend :
l'étape consistant à faire en sorte, conformément à un ordre décroissant de charges des cellules, qu'au moins une des cellules servies par la station de base quitte la zone de MBSFN.

3. Procédé de gestion d'eMBMS selon la revendication 1, dans lequel la gestion, par la MCE, de ressources eMBMS conformément aux informations de charge reçues, comprend en outre :
lorsque les informations de charge indiquent que le niveau de charge de la station de base est inférieur ou égal à un second seuil, faire en sorte, par la MCE, que la station de base ou au moins une des cellules servies par la station de base rejoigne la zone de MBSFN.

4. Procédé de gestion d'eMBMS selon l'une quelconque des revendications 1 à 3, dans lequel les informations de base reçues par la MCE sont des informations de charge globales de la station de base et/ou des informations de charge de cellules servies par la station de base.

5. Procédé de gestion d'eMBMS selon l'une quelconque des revendications 1 à 4, avant que la MCE reçoive les informations de charge, le procédé comprenant en outre :
l'envoi, par la MCE, d'une demande de requête à la station de base, dans lequel la demande de requête est utilisée pour donner l'instruction à la station de base d'envoyer les informations de charge.

6. Procédé de gestion d'eMBMS selon l'une quelconque des revendications 1 à 5, dans lequel, lorsque la station de base et la MCE se trouvent dans un même réseau de communication, les informations de charge sont portées dans une signalisation de protocole d'interface M2 ; ou
lorsque la station de base et la MCE se trouvent dans des réseaux de communication différents, les informations de charge sont portées dans un message de gestion d'informations de réseau d'accès radio, RIM.

7. Procédé de gestion d'eMBMS selon l'une quelconque des revendications 1 à 6, comprenant en outre :
l'envoi, par la MCE, d'informations QoS à la station de base.

8. Entité de coordination de service de diffusion et de multidiffusion multimédia, MCE, la MCE comprenant :
un module de réception (401), configuré pour recevoir des informations de charge envoyées par une station de base; et
un module de gestion (402), configuré pour gérer des ressources eMBMS conformément aux informations de charge reçues,
la MCE étant **caractérisée en ce que** le module de gestion (402) comprend :
une première unité de gestion (4021), configurée pour : lorsque les informations de charge indiquent qu'un niveau de charge de la station de base est supérieur ou égal à un premier seuil, faire en sorte que la station de base quitte une zone de réseau monofréquence de diffusion et de multidiffusion, MBSFN, ou faire en sorte qu'au moins une des cellules servies par la station de base quitte une zone de MBSFN.

9. MCE selon la revendication 8, dans laquelle :
la première unité de gestion (4021) est configurée pour, conformément à un ordre décroissant de charges des cellules, faire en sorte qu'au moins une des cellules servies par la station de base quitte la zone de MBSFN.

10. MCE selon la revendication 8, dans laquelle le module de gestion (402) comprend en outre :
une seconde unité de gestion (4022), configurée pour: lorsque les informations de charge indiquent que le niveau de charge de la station de base est inférieur ou égal à un second seuil, faire en sorte que la station de base ou au moins une des cellules servies par la station de base rejoigne la zone de MBSFN.

11. MCE selon l'une quelconque des revendications 8 à 10, dans laquelle les informations de charge reçues par le module de réception (401) sont des informations de charge globales de la station de base et/ou des informations de charge de cellules servies par la station de base.

12. MCE selon l'une quelconque des revendications 8 à 11, comprenant en outre :
un premier module d'envoi (404), configuré pour: avant que les informations de charge soient reçues, envoyer une demande de requête à la station de base, dans laquelle la demande de requête est utilisée pour donner l'instruction à la station de base d'envoyer les informations de charge.

13. MCE selon l'une quelconque des revendications 8 à 12, dans laquelle, lorsque la station de base et la MCE se trouvent dans un même réseau de communication, les informations de charge sont portées dans une signalisation de protocole d'interface M2 ; ou
lorsque la station de base et la MCE se trouvent dans des réseaux de communication différents, les informations de charge sont portées dans un message de gestion d'informations de réseau d'accès radio, RIM.

14. MCE selon l'une quelconque des revendications 8 à 13, comprenant en outre :
un second module d'envoi (405), configuré pour envoyer des informations QoS à la station de base.

15. Programme informatique comprenant des moyens de code de programme pour exécuter la totalité des étapes du procédé selon l'une quelconque des revendications 1 à 6 lorsque le programme est exécuté sur un ordinateur.
